# EUROPÄISCHE PATENTSCHRIFT

(11) **EP 0 556 543 B1**
(45) Veröffentlichungstag und Bekanntmachung des Hinweises auf die Patenterteilung: **16.07.1997**
(21) Anmeldenummer: 93100166.3
(22) Anmeldetag: 08.01.1993
(51) Int. Cl.: B60B 33/04, F16F 9/30, B62B 3/06

(54) **Flurförderzeug**
Industrial truck
Chariot de manutention

(30) Priorität: 20.02.1992 DE 4205150
(43) Veröffentlichungstag der Anmeldung: 25.08.1993
(73) Patentinhaber: Jungheinrich Aktiengesellschaft, 22047 Hamburg (DE)
(72) Erfinder: Bruns, Rainer, Dr.-Ing., W-2000 Hamburg 67 (DE)
(74) Vertreter: Patentanwälte Hauck, Graalfs, Wehnert, Döring, Siemons

(56) Entgegenhaltungen:
- DE-A- 3 041 549
- FR-A- 2 468 475
- GB-A- 1 415 232
- GB-A- 2 172 373
- GB-A- 2 187 687

## Beschreibung

Die Erfindung bezieht sich auf ein Flurförderzeug nach dem Oberbegriff des Patentanspruchs 1.

Flurförderzeuge, insbesondere Gabelhubwagen, werden häufig als vier-, fünf- oder sechsrädrige Fahrzeuge ausgeführt, wobei ein oder mehrere Räder nachlaufende Stützrollen sind. Es ist bekannt, einen Teil der Stützrollen mit einer Federung zu versehen, damit bei einer Fahrt über unebenem Boden, Schwellen oder Rampen eine hinreichende Traktion des gelenkten, angetriebenen und gebremsten Rades gewährleistet ist. Die Federung kann auf unterschiedliche Weise verwirklicht werden. Aus dem DE-U-1 948 685 ist bekannt, die Rollengabel unmittelbar über eine vertikale Feder in Schwenkachsenrichtung federnd abzustützen. Aus der gleichen Druckschrift ist auch bekanntgeworden, die Rollengabel an einem Lenker anzubringen, der seinerseits um eine horizontale Achse am Fahrzeug drehbar gelagert ist. Zwischen dem Lenker und dem Fahrzeug ist eine Feder angeordnet, die ebenfalls die gewünschte Bodenaufstandskraft für die Stützrolle erzeugt. Ähnliche Konstruktionen sind aus der DE-A-36 12 925, DE-A-27 03 443 oder DE-A-34 43 835 bekanntgeworden.

Aus dem DE-U-7 930 623 ist ein Fahrzeug der eingangs genannten Art bekanntgeworden, bei dem ein Lenker für eine Stützrolle über einen Gummipuffer an einem fahrzeugfesten Teil abgestützt ist.

Aus GB-A-2 187 687 ist für ein Rad eines lastaufnehmenden, gezogenen Fahrzeugs bekannt, es über eine Federdämpfereinheit abzustützen. Als Federn können Gummipuffer, Torsions- oder Blattfedern verwendet werden und für die Dämpfung hydraulische oder pneumatische Dämpfer.

Aus DE-A-30 41 549 ist ein Stoßdämpfer für verschiedene Fahrzeuge, wie Kraftmaschinen, Baumaschinen, Kräne oder dergleichen bekanntgeworden, bei dem ein mit kompressiblem Elastomer gefüllter Hydraulikzylinder vorgesehen ist, dessen Kolben Drosselbohrungen aufweist und der mit der Zylinderwandung einen gedrosselten Durchgang bildet.

Durch die Federung der Stützrollen wird das Fahrzeug zu einem schwingungsfähigen System, das bei bestimmten Betriebsbedingungen zu unerwünschten Schwingungen angeregt werden kann. So neigen etwa deichselgeführte Niederhubwagen bei der Fahrt ohne oder mit nur geringer Last zu Kippschwingungen um eine im wesentlichen in Fahrzeuglängsrichtung verlaufende Achse. Die Kippschwingungen verhindern die vollständige Ausnutzung der zur Verfügung stehenden Fahrgeschwindigkeit. Die Folge ist eine Verringerung der Umschlagleistung.

Der Erfindung liegt daher die Aufgabe zugrunde, ein Flurförderzeug so auszubilden, daß störende Schwingungen des Fahrzeugs verhindert werden oder zumindest rasch abklingen.

Diese Aufgabe wird gelöst durch die Merkmale des Patentanspruchs 1.

Bei dem erfindungsgemäßen Flurförderzeug ist ein Feder-Dämpfungselement von einem mit einem zähflüssigen, kompressiblen Elastomer gefüllten Hydraulikzylinder mit einseitiger Kolbenstange gebildet, dessen Kolben mindestens eine Drosselbohrung aufweist und/oder einen Drosselspalt mit der Zylinderwandung bildet. Beim Eindringen des Kolbens in den Zylinder verringert sich das Kammervolumen, wodurch das Elastomer komprimiert wird und der Innendruck ansteigt. Hierdurch entsteht eine Kraft, die den Kolben aus dem Zylinder herauszudrücken sucht. Beim Verschieben des Kolbens wird das Elastomer außerdem zum Beispiel durch einen Spalt gepreßt; dabei wird mechanische Energie infolge der inneren Reibung des Elastomers abgebaut, und es entsteht eine geschwindigkeitsabhängige entgegen der Bewegungsrichtung wirkende Kraft, die maßgeblich für die Dämpfungswirkung ist. Ein derartiges Dämpfungselement hat den Vorteil, daß es äußerst kompakt ist und auch bei beengten Platzverhältnissen in vorteilhafter Weise eingesetzt werden kann. Da es aus einer Einheit besteht, ist auch die Montage denkbar einfach.

Die Feder- und Dämpfungskonstanten lassen sich aus den geometrischen Parametern des Zylinders und den rheologischen Stoffgrößen des Elastomers nach bekannten Formeln berechnen.

Die Erfindung wird nachfolgend anhand von Zeichnungen näher erläutert.
- Fig. 1: zeigt perspektivisch den unteren Teil eines deichselgeführten Niederhubwagens mit zwei erfindungsgemäß gelagerten Stützrollen.
- Fig. 2: zeigt schematisch eine erste Ausführungsform einer Lagerung für den Niederhubwagen nach Fig 1.
- Fig. 3: zeigt schematisch eine zweite Ausführungsform einer Lagerung für den Niederhubwagen nach Fig 1.
- Fig. 4: zeigt schematisch eine erste Feder-Dämpfungselement für die Lagerung nach Fig 2 oder 3.

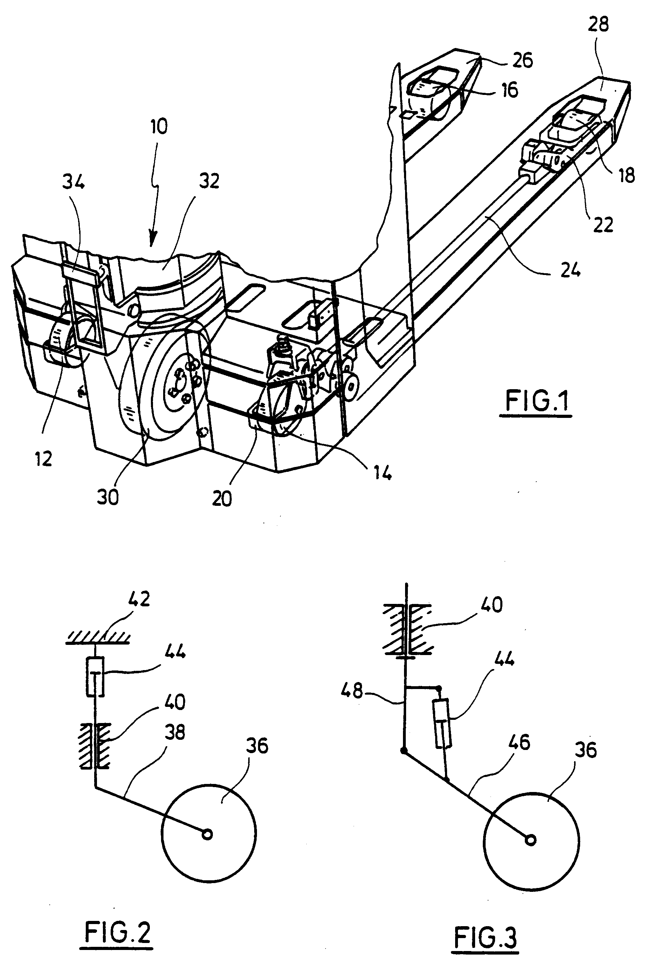

Der Aufbau eines Niederhub-GabelhubwagenS 10 nach Fig. 1 ist allgemein bekannt. Er soll daher nicht im einzelnen erläutert werden. Er weist vier Stützrollen 12, 14, 16 und 18 auf, von denen die ersten beiden mittels einer Rollengabel 20 um eine horizontale Achse kippbar und um eine vertikale Achse drehbar angeordnet sind; das Kippen ist durch ein nicht gezeigtes Feder-Dämpfungselement abgefedert und gedämpft. Die anderen Stützrollen 16, 18 sind an einer Schwinge 22 gelagert, die mit Hilfe einer Steuerstange 24 verschwenkt werden kann, um die Gabelarme 26, 28 in bekannter Weise anzuheben. Zwischen den Stützrollen 12, 14 ist ein Antriebsrad 30 angeordnet, das von einem bei 32 angedeuteten Motor angetrieben ist. Außerdem kann das Antriebsrad 30 mit Hilfe einer bei 34 angedeuteten Deichsel verschwenkt werden, die zudem Bedienorgane für das Anheben oder Absenken der Gabelarme 26, 28 und den Antriebsmotor 32 enthält.

In den Figuren 2 und 3 werden Beispiele der Lagerung der Stützrollen 12, 14 gezeigt.

Fig. 2 zeigt eine Stützrolle 36, die an einer L-förmigen Gabel 38 gelagert ist, die ihrerseits bei 40 vertikal geführt ist. Die Abstützung der Gabel 38 an einem fahrzeugfesten Widerlager 42 erfolgt mit Hilfe eines Feder-Dämpfungselements 44. Bei der Ausführungsform nach Fig. 3 ist das Feder-Dämpfungselement 44 zwischen einer Gabel 46 und einem vertikal geführten Lagerbauteil 48 angeordnet, das im fahrzeugfesten Lager 40 geführt ist. Das Feder-Dämpfungselement 44 bewirkt bei beiden Ausführungsformen nach Fig. 2 und Fig. 3 eine federnde und gleichzeitig gedämpfte Abstützung der Stützrolle 36, so daß zum Beispiel bei dem Flurförderzeug nach Fig. 1 unerwünschte Schwingungen, die eine Ausnutzung der Maximalgeschwindigkeit nicht zulassen, unterdrückt werden.

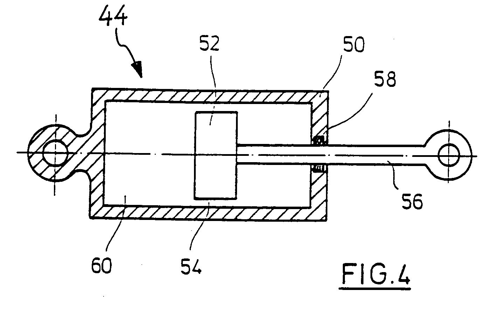

In Fig. 4 ist das Federdämpfungselement 44 allein dargestellt, bei dem in einem Zylinder 50 ein Kolben 52 angeordnet ist, der einen Drosselspalt 54 zur Zylinderwandung hat. Die einseitig herausgeführte Kolbenstange 56 ist bei 58 abgedichtet. Im Zylinder 50 befindet sich eine elastomere kompressible Flüssigkeit 60. Wird zum Beispiel der Kolben 52 in den Zylinder 50 hineinbewegt, vergrößert sich das verdrängte Volumen, wodurch das Medium 60 komprimiert wird und eine Rückstellkraft auf die Kolbenstange 56 ausübt. Gleichzeitig quetscht sich das Medium durch den Drosselspalt 54, wodurch mechanische Energie in Wärme umgewandelt wird, was zu einer entsprechenden Dämpfung der Kolbenbewegung führt.

## Patentansprüche

1. Flurförderzeug mit einem Antriebsrad (30), mindestens einer Stützrolle (12, 14) neben dem Antriebsrad (30) und vorderen Lasträdern (16, 18) an den freien Enden von Gabelarmen (26, 28), wobei die Stützrolle (12, 14) um eine horizontale Achse drehbar in einer Rollengabel gelagert ist, die mittels eines Lagerbauteils um eine vertikale Achse schwenkbar und um eine horizontale Achse kippbar gelagert ist, und einer Feder (50) zwischen der Rollengabel und dem Lagerbauteil bzw. dem Fahrzeug zur federnden Abstützung der Stützrolle (12, 14), dadurch gekennzeichnet, daß ein Federdämpfungselement vorgesehen und als ein mit einem zähflüssigen, kompressiblen Elastomer (60) gefüllter Hydraulikzylinder (50) ausgebildet ist, dessen Kolben (52) mindestens eine Drosselbohrung aufweist und/oder einen Drosselspalt (54) mit einer Zylinderwandung bildet.

## Claims

1. An industrial truck including a drive wheel (30), at least one support roller (12,14) adjacent the drive wheel (30), and frontal load wheels (16,18) at the free ends of fork arms (26,28), the support roller (12,14) being mounted in a roller fork so as to be rotatable about a horizontal axis, which roller fork, by means of a suspension member, is rotatable about a vertical axis and pivotal about a horizontal axis, and a spring (50) between the roller fork and the suspension member or, respectively, the vehicle for resilient suspension of the support roller (12,14), characterized in that there is provided a spring damper element formed as a hydraulic cylinder (50) filled by a viscous compressible elastomer (60), the piston (52) of the hydraulic cylinder including at least one restriction bore and/or defining together with a cylinder wall a restriction gap (54).

## Revendications

1. Véhicule de manutention au sol pourvu d'une roue d'entraînement (30), d'au moins une roulette d'appui (12, 14) près de la roue d'entraînement (30) et de roues de charge avant (16, 18) aux extrémités libres de parties horizontales de fourche (26, 28), la roulette d'appui (12, 14) étant montée rotative autour d'un axe horizontal dans une chape de roulette qui, au moyen d'une pièce formant palier, est montée pivotante autour d'un axe vertical et basculante autour d'un axe horizontal, et pourvu d'un ressort (50) entre la chape de roulette et la pièce formant palier ou le véhicule pour supporter élastiquement la roulette d'appui (12, 14), caractérisé en ce qu'un élément d'amortissement à ressort est prévu et est constitué d'un cylindre hydraulique (50) rempli d'un élastomère compressible (60) visqueux, dont le piston (52) comporte au moins un orifice d'étranglement et/ou forme une fente d'étranglement (54) avec une paroi du cylindre.
